Europäisches Patentamt

(19) European Patent Office

Office européen des brevets

(11) Publication number: **0 299 564 B1**

(12) **EUROPEAN PATENT SPECIFICATION**

(45) Date of publication of patent specification:
27.03.91 Bulletin 91/13

(51) Int. Cl.⁵: **B23D 25/00**

(21) Application number: **88201386.5**

(22) Date of filing: **04.07.88**

(54) **Temper mill installation and shearing machine for use in such an installation.**

(30) Priority: **13.07.87 NL 8701643**

(43) Date of publication of application:
**18.01.89 Bulletin 89/03**

(45) Publication of the grant of the patent:
**27.03.91 Bulletin 91/13**

(84) Designated Contracting States:
**BE DE ES FR GB IT LU SE**

(56) References cited:
**GB-A- 868 867**
**GB-A- 934 951**
**US-A- 3 740 848**

(73) Proprietor: **HOOGOVENS GROEP B.V.**
**P.O. Box 10.000**
**NL-1970 CA IJmuiden (NL)**

(72) Inventor: **De Blok, Jan Francies**
**Van Loenenlaan 53**
**NL-1945 TB Beverwijk (NL)**
Inventor: **Korver, Johannes Cornelis**
**Korteweide 79**
**NL-1722 VC Zuid-Scharwoude (NL)**

(74) Representative: **Van Breda, Jacobus, Mr. Ir. et al**
**HOOGOVENS GROEP BV P.O. Box 10.000**
**NL-1970 CA IJmuiden (NL)**

## Description

The invention relates according to the precharacterising part of claim 1 to a temper mill installation having an uncoiler for coils of steel strip, a rolling mill for the steel strip, a shearing machine for cutting the steel strip and a coiler for the steel strip rolled by the mill. The invention also relates to a shearing machine for use in the temper mill installation. A temper mill may be a skin-pass mill. A use of such a mill is hardening, espacially cold-hardening.

A temper mill installations of the type described above are known in rolling mill practice. The shearing machine used is usually equipped with guillotine shears. Because of the size of the known shearing machine it is customary to position it between the rolling mill and the coiler. However, this has the disadvantage, explained below, that for each coil worked in the temper mill installation a number of metres of steel strip cannot be treated, and are unnecessarily wasted.

The innermost turns of a coil, which is placed on the uncoiler, are generally damaged in such a way that to pass those turns through the rolling mill could result in damage to the mill rolls. Immediately before the damaged turns reach the rolling mill, the rolling process is therefore stopped. Then the quillotine shears positioned at the discharge end of the rolling mill are operated, after which coiling can be completed. The part of the strip which extends from the damaged turns on the entry side of the rolling mill to the position of the shearing machine is of good quality. Nevertheless, this part of the strip is separated from the coil of steel strip which has meanwhile been wound on the coiler, and must be treated as waste.

A further disadvantage of the known temper mill installation is that the strip remaining behind in the rolling mill still has to be removed. This is generally solved by causing the uncoiler after the shearing machine has operated, to coil up the uncoiled strip by reversing the direction of rotation of the uncoiler. This however reduces the production capacity of the temper mill installation and imposes extra requirements on the control of the uncoiler.

It is known from GB-A-868,867 to remove, by shearing, service tails from coiled metal strip, particularly strip which has been cold-rolled in a reversing mill, while uncoiling the strip for further treatment. This further treatment is in particular softening and descaling.

The invention is intended to overcome the abovementioned disadvantages, and provide a temper mill installation in which waste of strip is minimized.

According to the invention the temper mill installation comprises the features of claim 1. The shearing head is moved to effect the shearing of the strip. In this way a satisfactory positioning of the shearing machine is achieved insofar as occupation of space is concerned. A coil of steel strip can be uncoiled as far as the damaged turns and rolled without losing good quality strip, since the strip is cut by the movable shearing head close to the damaged portion. Furthermore, it is no longer necessary to reverse the uncoiler.

The invention is applicable both to new and existing temper mill installations. On the entry side of the temper mill installation strip breakage occurs regularly which can cause damage to surrounding apparatus. This is a restriction on installing known guillotine shears on the entry side. The temper mill installation according to the invention permits the use of a shearing machine on the entry side, without the shearing machine being thereby exposed to the danger of damage.

Preferably the shearing machine has at least one movable beam extending perpendicularly to the movement direction of the steel strip. The shearing head is attached to this beam. In this arrangement it is possible to keep the shearing machine during rolling completely outside the movement path of the strip and in consequence no modifications are required to the feed part of an existing temper mill installation in order to introduce the new shearing machine.

It is advantageous for the shearing head to be movable along the beam in the longitudinal direction of the beam. It is also preferable that at the start of cutting during normal use of the installation the shearing head is positioned at a first end of the beam. This first end lies closest to the strip movement path.

In view of the desirability of automating the entire process of uncoiling, rolling and coiling as far as possible, it is preferred that the parts of the installation should have defined positions. For this reason it is recommended that the said first end of the beam has means which, at least at the beginning of cutting, provide a resistance force to prevent movement of the shearing head along the beam. Preferably a friction brake is used for this purpose.

The beam and the shearing head carried by it must carry out a combined movement, such that the strip can be cut with sufficient speed. For this purpose both the beam and the shearing head may each have their own drive. However, it is particularly advantageous if the first end of the beam is fitted with a friction brake to restrain the shearing head. In this arrangement only the shearing elements, e.g. discs, need a drive and the shearing head as a whole does not require a separate drive system. A shearing head with two interacting shearing discs cuts the strip at a speed which is dependent on the speed of rotation of the shearing discs. For satisfactory operation of the shearing machine it is also desirable that during normal use the beam moves at a speed higher than the speed at which the shearing head cuts the steel strip.

With a view to the desired automatic operation of the shearing machine it is preferable that the shearing head has an inductive element for detecting the presence of the steel strip. If during the cutting the absence of steel strip is detected, the cutting is terminated and the shearing machine is moved back to its starting position.

The invention also relates to a shearing machine suitable for use in a temper mill installation according to claim 9.

A preferred embodiment of the invention will now be described in detail by way of non-limitative example with reference to the drawings, in which :

Fig. 1 shows a temper mill installation embodying the invention in side view.

Fig. 2 shows a shearing machine embodying the invention in side view.

The same reference numbers in the two figures refer to the same components.

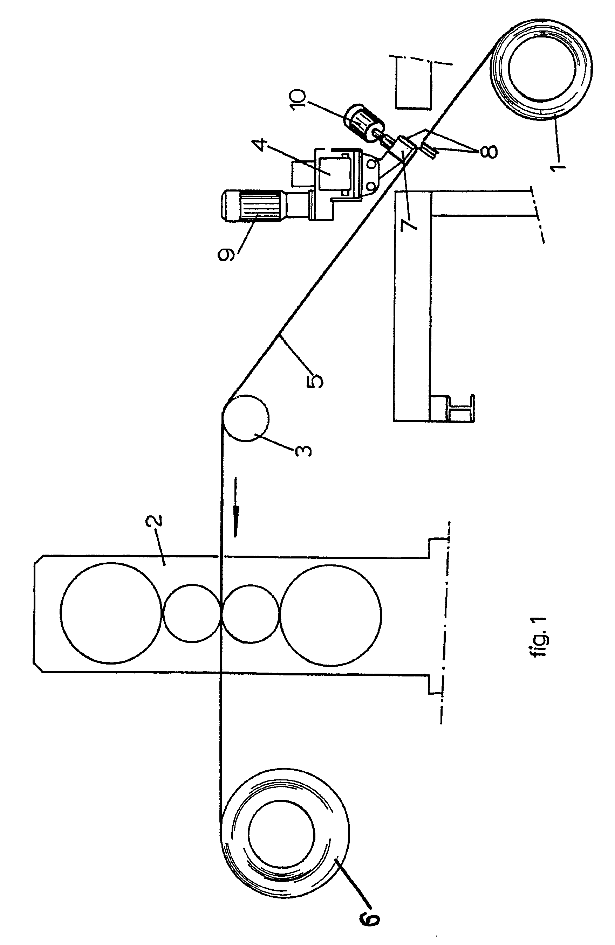

Fig. 1 shows a coil of steel strip placed on an uncoiler 1 from which the steel strip 5 is passed over a direction-changing roller 3 to a rolling mill 2. A coiler 6 is positioned beyond the rolling mill 2 to coil up the finished steel strip. This is as so far described a conventional temper mill installation and need not be described further. In accordance with the invention, a shearing machine 4 is arranged close to the uncoiler 1 and in use is operated just before the last turns leave the uncoiler 1. The shearing machine 4 then cuts off the last, usually damaged turns from the part of the strip which is of good quality.

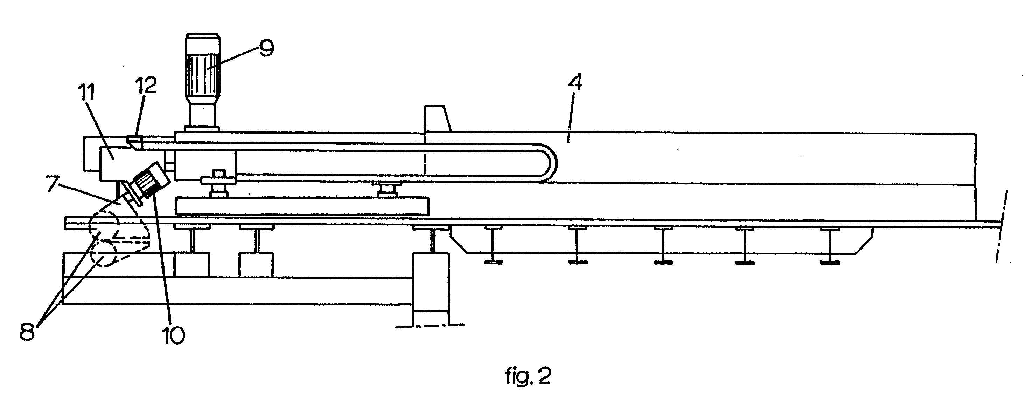

Details of the shearing machine are shown in Fig. 2, which illustrates the starting position of the shearing machine 4 before a cutting operation. The shearing machine 4 is then in its entirety next to the path of strip transport (which is at the left-hand side of Fig. 2). The shearing machine has a beam 11 which extends perpendicularly to the movement direction of the strip and is movable, under the action of a motor 9, perpendicularly above the strip. Mounted on the beam 11 and movable along it is a shearing head 7 comprising cooperating shearing discs 8 for cutting the steel strip and a drive motor 10 for the discs 8. A friction brake 12 provides a resistance force holding the shearing head 7 at its predetermined starting position at the end of the beam 11 closest to the strip path. This brake 12 is released when a cutting operation takes place.

When a shearing operation is required, the drive motor 9 is started up so that the beam 11 is moved in the direction to the strip. The shearing head 7 is mounted on the beam 11 at a height such that the strip passes precisely in the gap between the two shearing discs 8. The shearing discs 8 are driven by the drive motor 10. Until the moment that the strip comes into the gap between the shearing discs 8 the shearing head 7 is held firmly on the beam 11 by the friction brake 12.

The speed of displacement of the beam 11 is however greater than the speed with which the shearing discs 8 cut the strip. Hence the shearing head 7 is released by the friction brake 12 and moves freely along the beam 11. Also included in the shearing head 7 is an inductive element (not shown) by which the presence of steel strip 5 in the shearing head 7 is detected. When the shearing head 7 has cut the strip over its entire width, the inductive element detects the absence of the strip, whereupon the control of the shearing machine ensures that the beam 11 is moved back to its starting position as shown in Fig. 2.

## Claims

1. Temper mill installation for steel strip having an uncoiler (1) for coils of steel strip, a rolling mill (2) for the steel strip (5), a shearing machine (4) for cutting the steel strip (5) and a coiler (6) for coiling the steel strip after rolling by the rolling mill, wherein the strip moves in a path from the uncoiler (1) through the rolling mill (2) to the coiler (6) characterised in that the shearing machine (4) has a movable shearing head (7) and is positioned adjacent the strip path between the uncoiler (1) and the rolling mill (2), said shearing head being movable across the strip path to effect cutting of the strip on at least one movable beam (11) extending perpendicular to the movement direction of the strip in said path and movable perpendicularly to said movement direction.

2. Temper mill installation according to claim 1, wherein the shearing head (7) is movable along the beam (11) in the longitudinal direction of the beam (11).

3. Temper mill installation according to claim 2, wherein at the beginning of cutting of the strip (5) during normal operation of the shearing machine the shearing head (7) is positioned at a first end of the beam (11).

4. Temper mill installation according to claim 3 wherein said first end of the beam (11) is provided with means (12) for preventing at least at the start of cutting, movement of the shearing head (7) along the beam (11).

5. Temper mill installation according to claim 4 wherein said preventing means (12) is a friction brake.

6. Temper mill installation according to any one of claims 2 to 5 wherein during normal operation the beam (11) moves perpendicularly to the direction of movement of the strip at a speed greater than the speed at which the shearing head cuts the strip.

7. Temper mill installation according to any one of claims 1 to 6 wherein the shearing head (7) has two cooperating shearing discs (8) between which the strip (5) is sheared.

8. Temper mill installation according to any one of the preceding claims, wherein the shearing head (7) has an inductive element for detecting the presence of steel strip (5) at the shearing head.

9. Shearing machine suitable for use in a temper mill installation according to claim 1 having a movable shearing head (7), a beam (11) extending perpendicular to the movement direction of a strip to be cut and being movable in its longitudinal direction on which said shearing head (7) is mounted so as to be movable in the longitudinal direction of the beam (11), and means (12) for providing a resistance force holding the shearing head in initial position on said beam.

## Ansprüche

1. Härtungswalzwerk für Bandstahl mit einer Abwickelhaspel (1) für Bandstahlbunde, einem Walzwerk (2) für den Bandstahl (5), einer Maschinenschere (4) zum Abschneiden des Bandstahles (5) und einer Haspel (6) zum Aufwickeln des Bandstahles nach dem Walzen durch das Walzwerk, wobei sich das Band in einer Bahn von der Abwickelhaspel (1) durch das Walzwerk (2) zur Haspel (6) bewegt, dadurch gekennzeichnet, daß die Maschinenschere (4) einen bewegbaren Scherkopf (7) aufweist und der Bandbahn benachbart zwischen Abwickelhaspel (1) und Walzwerk (2) angeordnet ist, wobei der Scherkopf zum Schneiden des Bandes auf zumindest einem, sich senkrecht zur Bewegungsrichtung des Bandes in dieser Bahn erstreckenden und senkrecht zu dieser Bewegungsrichtung bewegbaren Balken (11) quer über die Bandbahn bewegbar ist.

2. Härtungswalzwerk gemäß Anspruch 1, wobei der Scherkopf (7) entlang des Balkens (11) in Längsrichtung des Balkens (11) bewegbar ist.

3. Härtungswalzwerk gemäß Anspruch 2, wobei der Scherkopf zu Beginn des Schneidens des Bandes (5) während des normalen Betriebes der Maschinenschere an einem ersten Ende des Balkens (11) angeordnet ist.

4. Härtungswalzwerk gemäß Anspruch 3, wobei dieses erste Ende des Balkens (11) mit Mittel versehen ist, welche zumindest am Beginn des Schneidens eine Bewegung des Scherkopfes (7) entlang des Balkens (11) verhindert.

5. Härtungswalzwerk gemäß Anspruch 4, wobei dieses Mittel (12) zum Verhindern eine Reibungsbremse ist.

6. Härtungswalzwerk gemäß irgendeinem der Ansprüche 2 bis 5, wobei der Balken (11) während des normalen Betriebs sich mit einer Geschwindigkeit senkrecht zur Bewegungsrichtung des Bandes bewegt, die größer ist als die Geschwindigkeit, bei der der Scherkopf das Band schneidet.

7. Härtungswalzwerk gemäß irgendeinem der Ansprüche 1 bis 6, wobei der Scherkopf (7) zwei zusammenwirkende Scherscheiben (8) besitzt, zwischen denen das Band (5) geschnitten wird.

8. Härtungswalzwerk gemäß irgendeinem der vorhergehenden Ansprüche, wobei der Scherkopf (7) ein induktives Element zum Feststellen der Anwesenheit eines Bandstahles (5) beim Scherkopf aufweist.

9. Maschinenschere, geeignet für die Verwendung in einem Härtungswalzwerk gemäß Anspruch 1 mit einem bewegbaren Scherkopf (7), einem Balken (11), welcher sich senkrecht zur Bewegungsrichtung eines zu schneidenden Bandes erstreckt und in seiner Längsrichtung bewegbar ist und auf welchem der Scherkopf (7) so montiert ist, daß er in Längsrichtung des Balkens (11) bewegbar ist, und mit Mittel (12) zum Vorsehen einer Widerstandskraft, welche den Scherkopf auf dem Balken in der Anfangsstellung hält.

## Revendications

1. Installation de laminoir de trempe pour bande d'acier ayant un dérouleur (1) pour des bobines de bandes d'acier, un moulin de trempe (2) pour la bande d'acier (5), une machine de coupe (4) pour couper la bande d'acier (5) et un enrouleur (6) pour enrouler la bande d'acier après le laminage dans le laminoir, dans laquelle la bande se déplace dans un chemin allant du dérouleur (1) et passant dans le laminoir (2) pour aller jusqu'à l'enrouleur (6), **caractérisée** en ce que la machine de coupe (4) a une tête de coupe mobile (7) et est positionnée au voisinage du chemin de la bande entre le dérouleur (1) et le laminoir (2), ladite tête de coupe étant mobile en travers du chemin de la bande de façon à effectuer la coupe de la bande sur au moins une poutre mobile (11) s'étendant perpendiculairement à la direction de déplacement de la bande dans ledit chemin et mobile perpendiculairement à ladite direction de déplacement.

2. Installation de laminoir de trempe selon la revendication 1, dans laquelle la tête de coupe (7) est mobile le long de la poutre (11) dans la direction longitudinale de la poutre (11).

3. Installation de laminoir de trempe selon la revendication 2, dans laquelle, au commencement de la coupe de la bande (5) durant le fonctionnement normal de la machine de coupe, la tête de coupe (7) est positionnée à une première extrémité de la poutre (11).

4. Installation de laminoir de trempe selon la revendication 3, dans laquelle ladite première extrémité de la poutre (11) est munie de moyens (12) pour empêcher, au moins au démarrage de la coupe, le déplacement de la tête de coupe (7) le long de la poutre (11).

5. Installation de laminoir de trempe selon la revendication 4, dans laquelle lesdits moyens de prévention (12) sont un frein à friction.

6. Installation de laminoir de trempe selon l'une quelconque des revendications 2 à 5, dans laquelle, durant le fonctionnement normal, la poutre (11) se déplace perpendiculairement à la direction de déplacement de la bande à une vitesse supérieure à la vitesse à laquelle la tête de coupe coupe la bande.

7. Installation de laminoir de trempe selon l'une quelconque des revendications 1 à 6, dans laquelle la tête de coupe (7) possède deux disques de coupe coopérants (8) entre lesquels est coupée la bande (5).

8. Installation de laminoir de trempe selon l'une quelconque des revendications précédentes, dans laquelle la tête de coupe (7) a un élément inductif pour détecter la présence d'une bande d'acier (5) au niveau de la tête de coupe.

9. Machine de coupe appropriée pour l'utilisation dans une installation de laminoir de trempe selon la revendication 1, ayant une tête de coupe mobile (7) une poutre (11) s'étendant perpendiculairement à la direction de déplacement d'une bande à couper et étant mobile dans sa direction longitudinale sur laquelle ladite tête de coupe (7) est montée de façon à être mobile dans la direction longitudinale de la poutre (11), et des moyens (12) pour délivrer une force de résistance permettant de maintenir la tête de coupe en position initiale sur ladite poutre.

fig. 1

fig. 2

7